# EUROPEAN PATENT APPLICATION

(11) **EP 2 682 419 A1**
(43) Date of publication of application: **08.01.2014**
(21) Application number: 12175454.3
(22) Date of filing: 06.07.2012
(51) Int. Cl.: C08J 5/18, C09D 105/00, C09K 3/18

(54) **Antifog coating composition and its coated polyester film**

(71) Applicant: Cryovac, Inc., Duncan, SC 29334-0464 (US)
(72) Inventor: Forloni, Roberto, 20017 RHO (MI) (IT); Haxhi, Aida, 15121 Alessandria (IT); Neplenbroek, Tonny, Soest (NL); Cantoni, Roberto, 20090 Segrate (IT); Ghirardi, Alessandra, 20156 MILANO (IT)
(74) Representative: Fraire, Cristina

(57) **Abstract**

A coated polyester film obtainable by coating a polyester film with a coating composition comprising at least an antifog additive, a cationic polysaccharide and a suitable diluent. The film is peelable when sealed to polyester containers. The packages so obtained are particularly suitable for fresh red meat and fish packaging.

## Description

### Technical field

The invention relates to a coated polyester film, preferably to a biaxially oriented coated polyester film, having a heat-sealable surface comprising a polyester resin, said film being obtainable by coating the surface of said heat sealable layer with a coating composition comprising at least an antifog additive and at least a cationic polysaccharide. The coated film is endowed with antifog properties, is peelable when sealed to polyester containers or films and it is also sealable through contaminants. The invention further relates to a method for producing the coated film and to its use as a lidding or wrapping film in food packaging operations.

### Background Art

Polyester films are commonly used as lidding films, in particular for ovenable containers and for case-ready market, particularly for fresh red meat and fish packaging. Packaging systems comprise a rigid or foam container. Materials suitable for the container are both rigid and foamed and usually comprise crystalline polyethylene terephtalate (CPET) or amorphous polyethylene terephtalate (APET). To improve the heat-sealability of these containers with the lidding films often the container comprises a layer of amorphous polyesters (typically APET) as the food contact layer. Biaxially oriented PET is generally employed as the lidding film. To improve the heat-sealability of the lidding film to the container often the lidding film also comprises a heat-sealable layer of lower melting or amorphous polyester, for example polyethylene terephtalate glycol (PETg) can be used. Usually, the biaxially oriented polyester films suitable for these applications are heat-set, i.e. non-heat-shrinkable or low-shrinkable materials.

Refrigerated food items are often displayed to consumers by resting the food item in a tray and covering the top of the tray with a transparent plastic film wrap. Typically, the food tray will have a perimeter lip extending above the stored food item so that the plastic film covering the top of the tray does not touch most of the packaged food. In this arrangement, the consumer may see clearly through the plastic wrap to view the food item stored in the package.

Upon refrigeration of a food item packaged in this manner, a "fog" may form on the inner, food-contact or food-side of the film, especially if the packaged food item has a high moisture content. The term "fog" describes the collection of small moisture droplets that condense on the inner side of the film wrap. Unfortunately, these water droplets may cloud the inner surface of the film and thus obstruct or disrupt the view through the film resulting in a negative consumer perception because of the inability to see clearly the packaged food through the plastic film wrap.

There have been several approaches to reduce the negative effects of fogging. One approach involves dispersing one or more antifog agents in the plastic film resin during processing of the film. Once in the film resin, the antifog agent tends to migrate to the surface of the film and raise the surface tension of the film. As a result, the water on the film inner side tends to form a relatively continuous film-like, transparent sheet of water rather than a fog.

Another approach to minimize the negative effects of fogging on a film involves applying an antifog coating directly to the plastic film's inner, food-side surface. Although this approach adds the expense of an additional coating step, it provides the benefit of applying the antifog agent to the film surface where it is most effective at reducing fogging.

These packaging films must be antifog in order to guarantee the pack appearance of the package and good see-through quality for consumer inspection. Several antifog additives are known in the art and can be applied with different tecniques, among them the coating being the most suitable for polyester films.

Another important property of the package required by the final consumer is the peelability: the force required to open the package must be comfortable for the consumer but still strong enough in order to avoid the accidental opening of the package during transportation, handling and storage of the same. Nowadays the peelability of the lid from the container is an important feature requested by most customers, to facilitate pack opening to final consumers. So far, the peelability has been imparted to packaging films by admixing further resins in the sealant layer. To reduce the sealing strength, thereby facilitating the removal of the film from the container or from a substrate by hand, usually blends of the polyester resin of the heat-sealable layer with 3 to 40% by weight, more frequently 15 to 25 % by weight of an appropriate thermoplastic resin have been used. Suitable thermoplastic resins that contribute to lowering the sealing strength of a polyester sealant layer of a film are polyamides, polystyrenes, in particular styrene-butadiene block copolymers, ionomers, ethylene/unsaturated carboxylic acid copolymers, like ethylene/(meth)acrylic acid copolymers and ethylene/cyclic olefin copolymers, like ethylene/norbornene copolymers. These resins have low compatibility with the polyester resin layer and the resulting phase separation confers the desired peelability but has negative effects on the film optical properties.

It has now been found that by applying a composition comprising at least an antifog additive and at least a cationic polysaccharide to the heat-sealable surface of a polyester packaging film, both antifog and peelability properties are achieved. Further, it has also been observed that the coated film so obtained can successfully be sealed to a suitable container or to itself even in case contaminants are present on the sealing surfaces.

Cationic polysaccharides are described for use in compositions for personal care, in particular for hair applications, and in compositions for fabric cleaning and/or fabric care.

Cationic polysaccharides are defined as polysaccharides containing a cationic group. The cationic charge on the cationic polysaccharide may be derived from ammonium groups, guanidium groups, sulfonium groups, phosphonium groups, bound transition metals, and other positively charged functional groups. A cationic group may be connected to the polysaccharide via an ether or an ester linkage.

Suitable polysaccharide polymers may be cellulose-based, pectin-based, starch-based, natural gum-based. Examples of starch-based polysaccharides are starches from rice, wheat, corn, tapioca or potato.

Cationic starches are well known and used in the field of paper manufacture to increase the fibres and fillers retention and to improve the physical properties of the paper.

These cationic starches are prepared by the reaction of the starch molecule with reagents enabling the appearance of a positive charge. The chemical bond may be of the ether or the ester type.

At present the majority of cationic starches on the market are prepared by means of nitrogen containing reagents. The reagent used may be based on a primary, secondary or tertiary amine or on a quaternary ammonium salt. The cationic starches may also be "amphoterised" by introducing anionic substituents into the starch. In this case, the amphoteric products are both cationic and anionic. Typically, the anions are phosphate or phosphonate groups.

GB2063282 describes a process for the cationization of starch, cationic starches so prepared and their use in different industrial fields: paint, varnish and ink industry, the plaster industry, ceramic industry, agriculture etc. US5891305, US4613407 and US8088209 describe the use of cationic additives for the manufacture of paper. EP1358806 describes a coating composition comprising at least one starch, at least one insolubiliser and optionally a plasticizer, such composition being coated onto food service bowls in order to provide water and oil resistance.

### Disclosure of the invention

It is therefore a first object of the present invention a coating composition comprising at least an antifog additive, a cationic polysaccharide and a suitable diluent.

A second object of the present invention is a coated polyester film, preferably a biaxially oriented coated polyester film, said film being obtainable by coating a suitable polyester film with a coating composition comprising at least an antifog additive, a cationic polysaccharide and a suitable diluent.

A third object of the present invention is a method for the manufacture of a coated polyester film, preferably a biaxially oriented coated polyester film , said coated film being obtainable by coating a suitable polyester film with a coating composition comprising at least an antifog additive, a cationic polysaccharide and a suitable diluent.

A fourth object of the present invention is a package comprising the coated polyester film of the invention and a product, optionally placed into a container.

The term " polyester" is used herein to refer to both homo-and co-polyesters, wherein homo-polyesters are defined as polymers obtained from the condensation of hydroxyacids or lactones or of one dicarboxylic acid with one diol and co-polyesters are defined as polymers obtained from the condensation of one or more dicarboxylic acids with one or more diols. Among polyesters, biodegradable polyesters are also included, in particular aliphatic and aromatic polyesters.

Example of biodegradable polyesters are: polyglycolide (PGA) and its copolymers with caprolactone, lactide or trimethylene carbonate, polylactide (PLA) , poly(lactide-co-glycolide) (PLGA), Poly(butylene succinate) (PBS) and poly(ethylene succinate), poly(butylene adipate-co-terephtalate) (PBAT).

A suitable PLA is commercialized for example under the tradename of NatureWorks® by CargillDow. A suitable PBAT is sold as Ecoflex® by BASF, Eastar Bio® by Eastman Chemical, Origo-Bi® by Novamont.

Polyesteramides may also be used such as those commercialised by Bayer under the tradename BAK®.

The first object of the present invention is a coating composition comprising at least an antifog additive, a cationic polysaccharide and a suitable diluent.

The ratio between the antifog additive and the cationic polysaccharide in the present coating composition is generally comprised between 1: 20 and 20:1, preferably between 1:10 and 10:1, more preferably between 1:7 and 7:1, even more preferably between 1:5 and 5:1.

Preferably said coating composition is a liquid composition, such as a solution, a suspension, an emulsion or a colloidal dispersion, more preferably is a solution or an emulsion, even more preferably is an aqueous solution.

In case of a liquid composition, the suitable diluent is a liquid solvent.

In a preferred embodiment, the liquid coating composition of the present invention comprises at least an antifog additive in an amount from 0.1 % to 5.0%, more preferably from 0.1 % to 2.0 %, even more preferably from 0.5 % to 1.5% and at least a cationic polysaccharide in an amount from 0.1 % to 3.5%, more preferably from 0.15% to 3 %, even more preferably from 0.2 % to 1.0% together with the selected solvent, preferably with water.

All the above percentages are percentages by weight calculated with respect to the total weight of the coating composition.

In the above coating composition other additives may also be present to impart better properties for instance to improve the stability of the composition, its sprayability, its adhesion to the surface after coating etc..

Preferably the coating composition of the present invention comprises an amount by weight of cationic polysaccharide lower than the amount by weight of antifog additives.

Suitable antifog additives for this application are non-ionic surfactants like polyhydric alcohol fatty acid esters, higher fatty acid amines, higher fatty acid amides, polyoxyethylene ethers of higher fatty alcohols, and ethylene oxide adducts of higher fatty acid amines or amides. Among these, polyhydric alcohol fatty acid esters, polyoxyethylene ethers of higher fatty alcohols and glycerin fatty acid esters are preferred. Among them, polyhydric alcohol fatty acid esters, commonly known as Spans, or their ethoxylated derivatives Tweens, such as Tween 80 (ethoxylated sorbitan mono-oleate, vegetal origin) distributed by Croda are particularly preferred.

Other particularly preferred antifog additives for use in the present composition are Glucopon® 650 EC (from Cognis Deutschland GmbH&Co) and Rhodasurf ® 870/H-20 (from Rhoda).

As defined herein, a cationic polysaccharide is a polysaccharide containing a cationic group. The cationic charge on the cationic polysaccharide may be derived from ammonium groups, guanidium groups, sulfonium groups, phosphonium groups, bound transition metals, and other positively charged functional groups.

A preferred cationic group is a quaternary ammonium group according to the formula 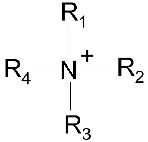 wherein each R₁, R₂, R₃ and R₄ is independently a lower alkyl or a lower hydroxyalkyl group. Preferably each R₁, R₂, R₃ and R₄ is independently a C₁-C₆ alkyl or a C₁-C₆ hydroxyalkyl group. More preferably, R₁, R₂ and R₃ are identical C₁-C₄ alkyl groups and R4 is a C₃-C₆ hydroxyalkyl group. Even more preferably, R₁, R₂ and R₃ are methyl groups and R₄ is a C₃-C₆ hydroxyalkyl group. Most preferably the cationic group is a quaternary 2-hydroxy-3-(trimethylammonium)propyl group.

A cationic group may be connected to the polysaccharide via an ether or an ester linkage.

The polysaccharide component of the cationic polysaccharide is a polymer comprising monosaccharide units linked by glycosidic linkages. The monosaccharide unit may be an aldose or a ketose of 5 or 6 carbon atoms. The polysaccharide may be a homopolysaccharide or a heteropolysaccharide, it may be linear or branched, and/or it may contain substituents, and/or it may be hydrophobically modified. Suitable polysaccharide polymers may be cellulose-based, pectin-based, starch-based, natural gum-based.

Examples of cellulose-based polysaccharides are hydroxyethylcellulose, hydrophobically modified hydroxyethylcellulose, ethyl hydroxyethyl cellulose, hydrophobically modified ethyl hydroxyethyl cellulose, hydroxypropylcellulose or sodium carboxymethylcellulose.

Examples of starch-based polysaccharides are starches from rice, wheat, corn, tapioca or potato.

Examples of natural gum-based polysaccharides are polygalactomannans like guar gums or locust bean gums, polygalactans like carrageenans, polyglucans like xanthan gums, polymannuronates like alginate. Preferred natural gums are based on guar gum.

Preferred cationic polysaccharides are cationic guars such as Guar gum 2-hydroxy-3-(trimethylammonium)propyl ether chloride and Guar gum 2-hydroxypropyl, 2-hydroxy-3-(trimethylammonio) propyl ether chloride. Suitable cationic guars are sold under the trade name Jaguar by Rhodia. Also preferred are cationic starches such as (3-Chloro-2-Hydroxypropyl)Trimethylammonium Chloride modified starch. Suitable cationic starches are sold for example under the tradenames HI-CAT or VECTOR by Roquette.

The starch may be a partially hydrolysed starch and it further may contain substituents and/or it may be hydrophobically modified. Preferred are cationic starches modified with a 2-hydroxy-3- (trimethylammonium) propyl group, such as 2-hydroxy-3(trimethylammonium)propyl ether chloride modified starch. Suitable cationic starches are sold under the tradenames Vector by Roquette, SolsaCAT by PT. Starch Solution International Kawasan, CATO by National Starch & Chemical, Mermaid by Shikishima Starch and Excell by Nippon Starch Chemical.

Particularly preferred polysaccharides for the present invention are cationic starches. Commercially available and preferred grades are sold under tradenames VECTOR SC 20157 (Roquette) and VECTOR IC 27216 (Roquette).

Cationic starches may be combined with certain anions, such as silicate and/or phosphonate and/or phosphate and/or ethylendiaminotetraacetate (EDTA) and/or methylglycinediacetate (MGDA) and/or nitrilotriacetate (NTA) and/or imminodisuccinate (IDS) and/or hydroxide and/or citrate and/or gluconate and/or lactate and/or acetate anions.

The cationic starches used for the present invention can be obtained by any process, in aqueous or other solvent medium or in the dry phase, such process enabling one or a number of nitrogenous group(s) of electropositive nature to be fixed to the starch or a mixture of starches of any nature and origin.

The degree of substitution (DS), representing the number of cationic groups, typically ranges from about 0.01 to 5%, preferably from 0.03% to 2%.

The cationic starches used according to the invention can moreover be of "polycationic" nature, such as those described EP406837 and US429444.

Suitable solvents for the liquid composition of the present invention comprise water, alcohols, glycol ethers and paraffines, water being the most peferred.

The liquid composition can be prepared by adding the selected amount of the antifog additive and the selected amount of the cationic polysaccharide into the selected amount of solvent in a tank; if water is used, the composition is kept under mechanical stirring preferably up to dissolution or emulsification of the components, at a temperature typically from about 40°C to about 50°C before being applied onto the film of the present invention using techniques known in the arte such as coating, spraying or dipping.

In a preferred embodiment, water is used as solvent and the resulting liquid composition comprises from 0.4% to 1.3%by weight of the antifog additive and from 0.1 to 0.4 % by weight of cationic polysaccharide.

In the most preferred embodiment, water is used as solvent and the liquid composition comprises from 0.5 to 1.1 % by weight of the antifog additive and from 0.2 to 0.3% by weight of the cationic polysaccharide.

The composition can comprise more than one antifog additive and more than one cationic polysaccharide.

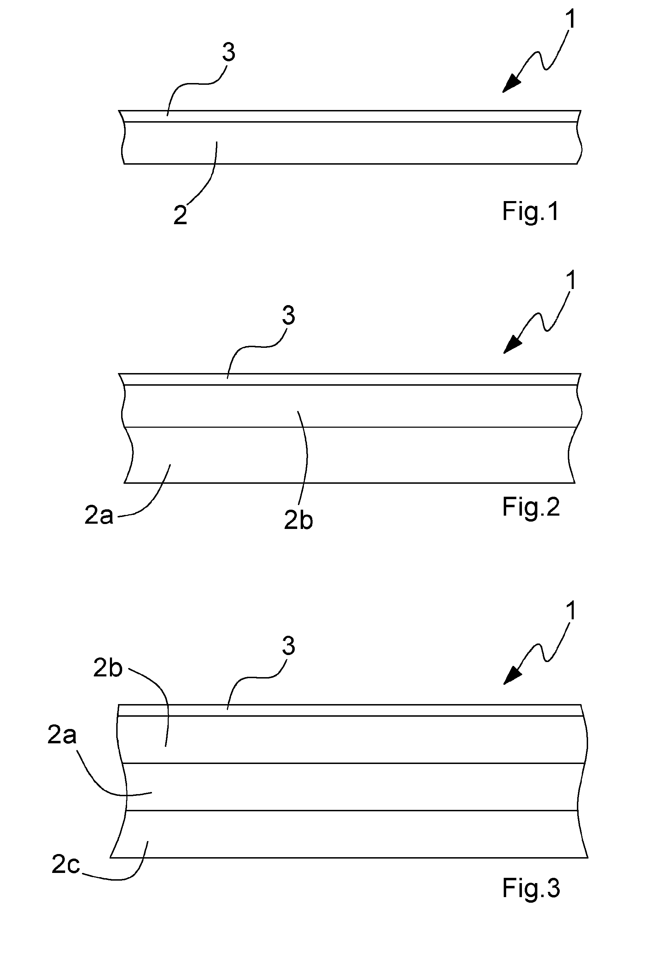

A second object of the present invention is a coated polyester film 1, as shown in figure 1, preferably a biaxially oriented coated polyester film, said film being obtainable by coating a suitable polyester film 2 with a coating composition 3 comprising at least an antifog additive and at least a cationic polysaccharide.

The total thickness of the inventive coated polyester film may vary within wide limits. It is preferably from 3 to 100 p m, in particular from 5 to 80 p m, preferably from 10 to 70 p m, even more preferably from 15 to 50 p m. The thickness of the coating is generally lower than 5 µm, preferably lower than 2 µm, more preferably lower than 1 µm.

Typically, for tray lidding applications, the films of the present invention have no or negligible shrink at temperatures below 140°C. The shrink (in each direction) is generally at most 15% at temperatures below 100°C, below 120°C, and even below 140°C.

Usually the shrink (in each direction) does not exceed 20% over the common heat-sealing temperature range of polyester films, namely in the range of from 140 to 200°C. The shrink generally does not exceed 20% (in each direction) at 180°C, at 160°C, and even at 150°C.

However, for other packaging applications, for instance in case of wrapped products or bags, different values of free shrink and/or of shrinking temperatures can be recommendable. Tailored shrink behaviour can be imparted to the present film by the skilled in the art through a suitable selection of process parameters, especially through appropriate orientation and/or annealing settings.

The coated polyester film object of the present invention is obtainable by coating a suitable polyester film with the coating composition previously described.

With " a suitable polyester film" a mono or multilayer film comprising a major amount of polyesters, preferably an amount higher than 50%, 60%, 70%, 80%, 90% or 95% with respect to the total weight of the polymer resins of the film, more preferably consisting of one or more polyesters, is meant.

The suitable polyester film may have one or both the two outer surfaces particularly suitable to be sealed. In the present description that surface is generally identified as sealing or sealant or sealable surface. In case of monolayer films both the surfaces are equally heat sealable; in case of a multilayer structure, said sealing surface is generally the outer surface of an external layer, named heat sealing or sealant or sealable layer, whose composition is tailored to allow a particularly advantageous and smooth sealability of the whole film.

In a first embodiment, a suitable polyester film to be coated according to the present invention is a monolayer polyester structure where the single layer acts as heat-sealable and structural layer and comprises an amorphous polyester resin optionally blended with a crystalline polyester, the term " crystalline" being used herein to indicate that the resin has a definite melting temperature. The amorphous polyester guarantees the heat-sealability of the film.

The heat-sealable layer or monolayer comprises at least a first amorphous polyester resin and optionally a further polyester resin.

Said amorphous polyester is characterized by a Tg value lower than 115°C, preferably lower than 95°C, even more preferably lower than 85°C.

Suitable amorphous polyester resins are those deriving from an aliphatic diol and a cycloaliphatic diol with one or more dicarboxylic acids, preferably an aromatic dicarboxylic acid. Preferred amorphous polyesters are co-polyesters of terephthalic acid with an aliphatic diol and a cycloaliphatic diol, particularly ethylene glycol and 1,4-dicyclohexanedimethanol. The preferred molar ratios of the cycloaliphatic diol to the aliphatic diol are in the range from 10:90 to 60:40, preferably in the range from 20:80 to 40:60, more preferably from 30:70 to 35:65. Specific examples of particularly preferred amorphous polyester are PETG Eastar^{®} 6763, sold by Eastman (glass transition temperature 81°C, density 1.27 g/cc) and Embrace sold by Eastman Chemical, (glass transition temperature 70.6°C, density 1.32 g/cc).

A blend of two or more amorphous polyesters is also suitable for the heat-sealable layer or monolayer of the film of the present invention.

Suitable further polyesters are those deriving from an aliphatic diol, preferably ethylene glycol and one or more aromatic dicarboxylic acid, preferably terephthalic acid.

Polyethylene terephthalate and its copolyesters are preferred. Specific examples include Eastapak Copolyester 9921 sold by Eastman and Ramapet N180 sold by Indorama.

The amount of the first amorphous polyester in the heat-sealable layer or monolayer of the film according to the present invention is preferably at least 30% by weight with respect to the total weight of the heat-sealable layer or monolayer, preferably at least 50% by weight, even more preferably at least 80%.

The amount of the further polyester in the heat-sealable layer or monolayer of the film according to the present invention is generally at most 70% by weight with respect to the total weight of the heat-sealable layer or monolayer, preferably at most 50% by weight, even more preferably at most 20%.

In a preferred embodiment the heat-sealable layer or monolayer of the film of the present invention only comprises an amorphous polyester.

Preferably said amorphous polyester derives from an aliphatic diol and a cycloaliphatic diol with one or more dicarboxylic acids, preferably an aromatic dicarboxylic acid selected among those deriving from an aliphatic diol and a cycloaliphatic diol with one dicarboxylic aromatic acid, more preferably with terephthalic acid.

In a preferred embodiment, a suitable film of the present invention comprises a heat-sealable layer 2a and a base layer 2b, both layers comprising a polyester. In this case, the film has a two-layer structure, as shown in figure 2.

The heat-sealable layer can have a thickness up to about 25 µm, preferably up to about 15 µm, more preferably between about 0.5 µm and 10 µm, and even more preferably between about 0.5 µm and 7 µm.

Mixtures or blends of homo- and/or co-polyesters can be used for the base layer.

Suitable polyester for the base layer are, for example, polyesters of ethylene glycol and terephthalic acid, i.e. poly(ethylene terephthalate) (PET). Preference is given to polyesters which contain ethylene units and include, based on the dicarboxylate units, at least 90 mol %, more preferably at least 95 mol %, of terephthalate units. The remaining monomer units are selected from other dicarboxylic acids or diols. Suitable other aromatic dicarboxylic acids are preferably isophthalic acid, phthalic acid, 2,5-, 2,6- or 2,7-naphthalenedicarboxylic acid. Of the cycloaliphatic dicarboxylic acids, mention should be made of cyclohexanedicarboxylic acids (in particular cyclohexane-1,4-dicarboxylic acid). Of the aliphatic dicarboxylic acids, the (C₃-C₁₉)alkanedioic acids are particularly suitable, in particular succinic acid, sebacic acid, adipic acid, azelaic acid, suberic acid or pimelic acid.

Suitable other aliphatic diols are, for example aliphatic diols such as ethylene glycol, diethylene glycol, triethylene glycol, propylene glycol, 1,3-butane diol, 1,4-butane diol, 1,5-pentane diol, 2,2-dimethyl-1,3-propane diol, neopentyl glycol and 1,6-hexane diol, and cycloaliphatic diols such as 1,4-cyclohexanedimethanol and 1,4-cyclohexane diol, optionally heteroatom-containing diols having one or more rings.

Suitable amorphous polyester resins for use in the base layer are co-polyesters of terephthalic acid with an aliphatic diol and a cycloaliphatic diol, preferably ethylene glycol and 1,4-cyclohexanedimethanol. A preferred polymer is PETG Eastar^{®} 6763 sold by Eastman.

The thickness of the base layer represents at least 50% of the overall thickness of the multi-layer film of the invention, from 50 to 90% of the overall thickness being preferred.

In another preferred embodiment, the polyester film of the invention has a three layer structure, as shown in figure 3. In this structure, a second outer or abuse layer 2c is present. Said abuse layer 2c is directly adhered to one side of the base layer 2b while the heat sealing layer 2a is directly adhered to the other side. Preferably said abuse layer comprises a major amount of a polyester, in particular more than 50%, 60%, 70%, 80%, 90%, more preferably consists of a polyester homo- and/or co-polyesters as previously defined can also be used for the outer or abuse layer, alone or in admixtures.

Said polyester is generally selected according to its mechanical, thermal, optical and surface properties which have to be suitable for the final applications. In particular the abuse layer has an important role in conferring stiffness, puncture resistance, thermal resistance, glossy appearance, transparency and printability to the final structure. For instance suitable polyesters for the abuse layer are RAMAPET N180 (by Indorama, density 1.4 g/cc, IV 0.8 mPas) or EASTAPAK COPOLYESTER 9921 (by Eastman Chemical, copolyester of PET).

The second outer or abuse layer can have a thickness up to about 25 µm, preferably up to about 15 µm, more preferably between about 0.5 µm and 10 µm, and even more preferably between about 0.5 µm and 7 µm.

The film of the present invention can further comprise a gas-barrier layer comprising well known gas-barrier resins and their blends. For example, ethylene-vinyl alcohol copolymers (EVOH), polyamides and acrylonitrile-based copolymers can be cited. Once the gas-barrier resin has been selected, its thickness will be set to provide for the desired permability properties.

Additional layers, such as for instance tie layers, to improve interlayer adhesion, may be present in the film.

Tie layers may be disposed between the respective layers in case where a sufficient adhesion is not ensured between adjacent layers. The adhesive resin may preferably comprise one or more polyolefins, one or more modified polyolefins or a blend of the above. Specific, not limitative, examples thereof may include: ethylene-vinyl acetate copolymers, ethylene-(meth)acrylate copolymers, ethylene- alpha -olefin copolymers, any of the above modified with carboxylic or preferably anhydride functionalities, elastomers, and a blend of these resins.

One or more of the layers of the film of the present invention may contain any of the additives conventionally employed in the manufacture of polymeric films. Thus, agents such as pigments, lubricants, anti-oxidants, radical scavengers, oxygen scavengers, UV absorbers, thermal stabilisers, anti-blocking agents, surface active agents, slip aids, optical brighteners, gloss improvers, viscosity modifiers may be incorporated as appropriate.

In particular, to improve the processing of the film in high speed packaging equipment slip and/or anti-blocking agents may be added to one or both of the outer layers. The additives may be added in the form of a concentrate in a polyester carrier resin. The amount of additive is typically in the order of 0.2 to 5% by weight of the total weight of the layer.

The film of the present invention can be extruded by means well known in the art; in case of multilayer structures, i.e. a film comprising more than one layer, coextrusion equipments are used, where each resin is extruded through an extruder and all the layers are joined into the extrusion die. Typically, for polyester films, flat die is used.

The film of the present invention is, preferably, also oriented. A tubular or, preferably, flat film orientation process can be used to produce a biaxially oriented film.

In a tubular process, also known as " double bubble" process, simultaneous biaxial orientation is obtained by extruding a thermoplastic resin tube which is subsequently quenched, reheated and then expanded by internal gas pressure to induce transverse orientation, and withdrawn at a rate which will induce longitudinal orientation. An example of equipment suitable for this technique is disclosed by US4841605.

In a flat film process, the film-forming thermoplastic resins are extruded through a T-die and rapidly quenched upon a chill roll to ensure that the resins are quenched to the amorphous state.

In order to improve the adhesion of the film on the chill roll electrostatic pinning can be used, as known in the art and as described in US5494619.

Orientation is then, optionally, effected by flat stretching, simultaneously or sequentially, the quenched extrudate at a temperature above the glass transition temperature of the thermoplastic resins.

In the sequential flat orientation method a flat, quenched extrudate is firstly oriented in one direction, usually the longitudinal direction, i.e. the forward direction through the film stretching machine, and then in the transverse direction. Longitudinal stretching of the extrudate is conveniently carried out over a set of rotating rolls (MDO), which rotate at different speeds. At least one of the first pairs of rolls is heated, for example by inner circulation of hot oil. Transverse stretching is usually carried out in a tenter apparatus (TDO), which comprises a certain number of heating zones and suitable stretching means.

To produce the film of the invention the polymers for the base layer, for the heat-sealable outer layer and, where appropriate, for the second outer layer are fed to separate extruders. The melts are extruded through a multilayer T-die and quenched over a chill roll. Longitudinal stretching (MDO) of the extrudate is conveniently carried out at a temperature range from 60 to 120° C, preferably from 70 to 100°C.

In the transverse stretching (TDO), the temperatures of the film are in the range from 90° C (preheating zone) to 130° C (stretching zone), preferably from 90°C (preheating zone) to 110°C (stretching zone).

The longitudinal stretching ratio is in the range from 2.0:1 to 5.0:1, preferably from 2.3:1 to 4.8:1. The transverse stretching ratio is generally in the range from 2.4:1 to 6.0:1, preferably from 2.6:1 to 5.5:1.

In the simultaneous flat orientation method a flat, quenched extrudate is simultaneously oriented in both the longitudinal and in the transverse direction through a simultaneous tenter apparatus.

Said extrudate is fed to the pre-heating zone of a simultaneous tenter apparatus, with or without a prior passage through an IR heated oven. The temperature of the oven in said pre-heating zone, the length thereof and the time spent by the traveling web in said zone (i. e. the web speed) can suitably be varied in order to bring the sheet up to the desired temperature for bi-axial orientation. In a preferred embodiment the orientation temperature is comprised between about 90 °C and about 140 °C and the temperature of the pre-heating zone is kept between about 90 °C and about 150 °C. In said pre-heating zone the sheet is clipped but it is not yet stretched. Thereafter, the resulting hot, optionally irradiated, and clipped sheet is directed to the stretching zone of the simultaneous tenter. Any simultaneous stretching means can be used in said zone. Preferably however the clips are propelled throughout the opposed loops of the tenter frame by means of a linear synchronous motor. A suitable line for simultaneous stretching with linear motor technology has been designed by Bruckner GmbH and advertised as LISIM line. An alternative line for simultaneous stretching of the extruded flat tape is the Andritz line, based on a pantograph, equipped with two separated monorails on each side of the orientation unit. The configuration of the tenter can be varied depending on the stretching ratios desired.

The temperature in the stretching zone is kept close to the selected orientation temperature.

In case, annealing is carried out at a temperature of from 140 to 220° C, the temperature depending on the desired shrink. Subsequently, the film is wound up in a customary manner.

Following said optional annealing or heat-setting step the film is transferred to a cooling zone where generally air, either cooled or kept at the ambient temperature, is employed to cool down the film. The temperature of said cooling zone is therefore typically comprised between about 20° C and about 40° C. At the end of the line, the edges of the film, that were grasped by the clips and have not been oriented, are trimmed off and the obtained bi-axially oriented, heat-shrinkable or heat-set film is then wound up, with or without prior slitting of the film web to the suitable width.

To improve the adhesion of the solution to the surface of the film, the heat sealable surface of the film is treated or modified to change the surface energy of the film. Surface treatments and modifications include: i) mechanical treatments, such as corona treatment, plasma treatment, and flame treatment, and ii) primer treatment. Surface treatments and modifications are known to those of skill in the art. Among them, the preferred one is corona treatment.

The polyester film can be coated with the coating composition of the first object by means of several techniques well known in the art, for example by brushing, dipping, press molding, electrostatic application, coating or spraying the coating composition onto the heat-sealable side of the film, thus providing the coated film of the present invention

A third object of the present invention is a method for the manufacture of a coated polyester film, preferably a biaxially oriented coated polyester film , said film being obtainable by coating a suitable polyester film with a coating composition comprising at least an antifog additive and at least a cationic polysaccharide.

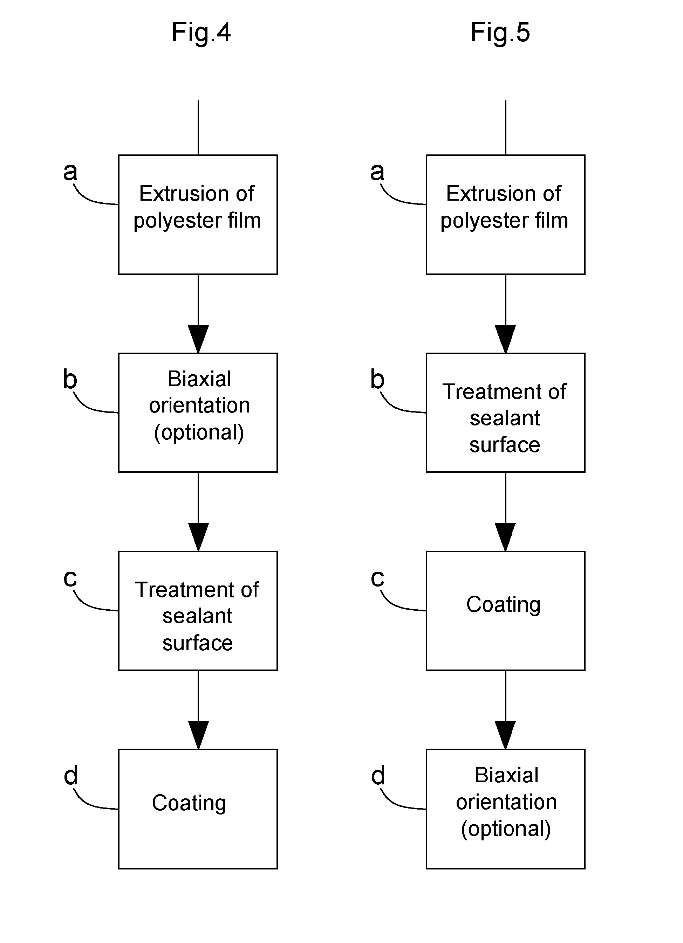

The method comprises the steps of (refer to figure 4):

a) extruding the suitable polyester film;

b) optionally biaxially orienting said extrudate;

c) treating the sealant surface of the polyester film by corona treatment, plasma treatment, flame treatment or primer treatment;

d) coating the film so obtained with a coating composition comprising at least an antifog additive and at least a cationic polysaccharide, according to the first object of the present invention, or alternatively (refer to figure 5):

a) extruding the suitable polyester film;

b) treating the sealant surface of the film to change its surface energy by corona treatment, plasma treatment, flame treatment or primer treatment;

c) coating the film so obtained with a coating composition comprising at least an antifog additive and at least a cationic polysaccharide, according to the first object of the present invention;

d) optionally biaxially orienting said extrudate.

The application of the coating composition to give the coated film of the present invention, may be carried out either by an in-line method involving application during the manufacture of the polyester film or by an off-line coating method involving application after the manufacture of the polyester film.

In the preferred embodiment, the film is coated after the orientation step.

To improve the adhesion of the solution to the surface of the film, the heat-sealable side of the film is treated or modified to change the surface energy of the film. Surface treatments and modifications include: i) mechanical treatments, such as corona treatment, plasma treatment, and flame treatment, and ii) primer treatment. Surface treatments and modifications are known to those of skill in the art. Among them, the preferred one is corona treatment. Control methods known in the art are available to check if the surface treatment was efficient in order to modify the surface tension of the film. For example, surface tension test pens by Sherman Treaters can be used and ASTM D2578 can be followed.

The suitable polyester films can be coated with the coating composition of the first object to give the coated polyester films of the present invention by means of several techniques well known in the art, for example by brushing, dipping, press molding, electrostatic application, coating or spraying the coating composition onto the heat-sealable surface of the film.

In the preferred embodiment, the film is coated by spraying an aqueous composition onto the heat-sealable surface of the film in a continuous process during which the film moves at a substantially steady speed. The composition to be sprayed is fed to several nozzles through a pump and is applied onto the film kept in vertical position. After the spraying, the film is allowed to pass under a spreading roll and then into a drying oven, kept at temperature between 80°C and 95°C, typically 90°C for some seconds. The residence time of the film into the oven will depend on the film line speed. This speed is set-up taking into consideration the oven dimensions, the oven temperature, the film shrinkability, the drying efficiency and can be easily defined through a routine experimentation. Commercially systems are available to implement this spraying process, for instance those sold by WEKO.

Spraying doses for the manufacture of the coated film of the present invention are comprised from 0.1 to 8 ml/m², 0.5 to 7 ml/m², 0.5 to 5 ml/m², 1 to 3 ml/m².

In the preferred embodiment, the spraying dose is comprised between 1.5 ml/m² and 2.5 ml/m².

For particular packaging applications, it may be advantageous applying the coating composition of the present invention onto both the outer surfaces of the suitable polyester film. In such a case, the resulting coated films will show the advantageous properties of smooth peelability, antifog and sealability through contamination on both sides of the film.

A fourth object of the present invention is a package 10 comprising the coated polyester film of the invention and a product, optionally placed into a container.

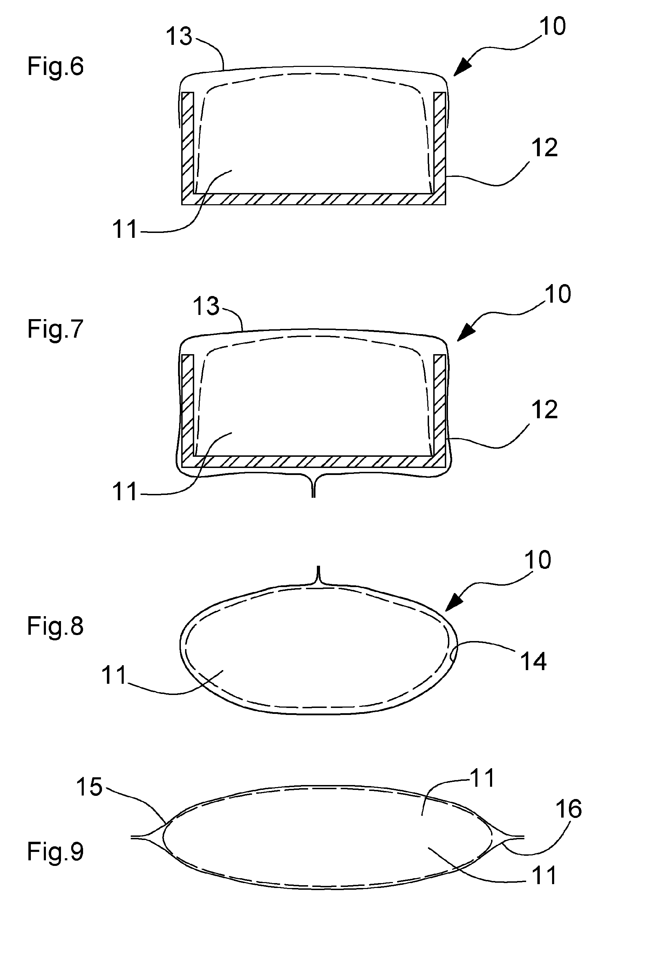

In one embodiment (figure 6) said package 10 comprises a container 12, a product 11 placed in the container and a lid 13 formed from the coated polyester film of the invention sealed onto the container.

In another embodiment (figure 7) said package 10 comprises a container 12, a product 11 placed in the container and the coated polyester film 1 of the invention wrapped around and suitably sealed to itself.

In another embodiment (figure 8) said package 10 comprises a bag or a pouch 14 and a product 11 packaged into said bag or pouch, wherein the bag or pouch is formed by sealing the coated polyester film of the invention to itself.

Self-sealing includes fin and/or lap seals. Suitable manufacturing processes include HFFS and VFFS processes, processes commonly known in the art of packaging.

In another embodiment (figure 9), said package 10 is formed by flexible top and a bottom webs 15, 16 sealed circumferentially and enclosing a product 11, being both the webs made of the coated polyester film of the present invention.

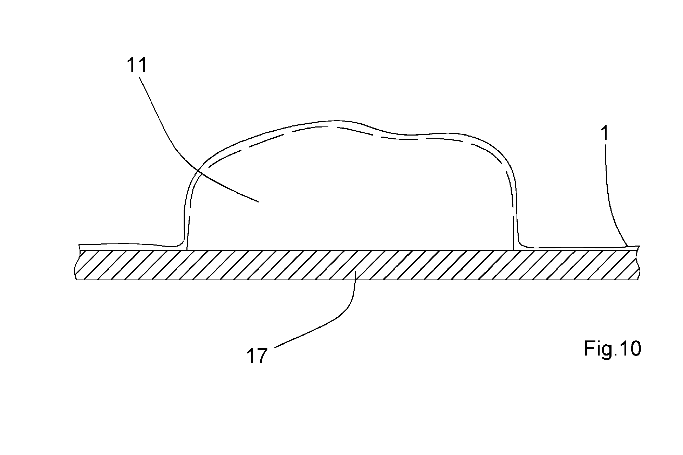

In another embodiment (figure 10), said package 10 comprises a bottom substrate 17, a product 11 placed onto said bottom substrate and the coated polyester film 1 of the invention draped over said product and sealed onto the surface of the bottom substrate all around the product (vacuum skin packaging or VSP applications).

Preferably the product packaged according to the fourth object of the present invention is a food product, preferably fresh meat or fish.

Depending on the peculiar kind of package and on the nature of the product, theinternal atmosphere can be suitably modified or removed or replaced by tailored gas admixtures, as well known in the art of packaging.

In case of tray lidding applications, the coated film of the present invention forms peelable seals with polyester-based materials, in particular with both APET and CPET containers.

Typically, the surface of the container in contact with the product, i.e. the surface involved in the formation of the seal with the lidding film, comprises a polyester resin. Examples of suitable containers for the package of the invention are CPET, APET or APET/CPET containers. Such containers can be foamed or not-foamed, i.e. solid.

The package is produced by techniques well-known to those skilled in the art. Once the food to be packaged has been introduced into the container, the coated polyester film of the invention is sealed onto the peripheral flange of the container using temperature and/or pressure according to conventional techniques and equipment. The coated film is placed on the container such that the heat-sealable coated layer is in contact with the surface of the container. Sealing is carried out by means of a heated frame at temperatures of from 140 to 220°C, 170 to 200°C at a pressure of 2 to 8 bar, 4 to 7 bar. Sealing times are typically in the order of 0.01 to 2.0 seconds, more frequently 0.5 to 1.0 seconds. The heat generated by the sealing frame, regardless of short sealing times, also promotes the shrinkage of the film, if heat-shrinkable, in both directions without distortion of the container to give a taut hermetically sealed lid.

The coated polyester film, preferably the biaxially oriented coated polyester film, of the present invention can be advantageously used in different packaging applications, preferably in food packaging applications.

Examples of possible packaging applications of said films are tray lidding, in particular case ready packages,wrapping of products - as such or placed into rigid trays - , manufactured for instance by Horizontal Form Fill Seal (HFFS) technology, bags- comprising different seales such as end seals, transversal seals etc, pouches, prepared for examples with Vertical Form Fill Seal (VFFS) equipments, flexible packaging and - as a top web - in vacuum skin (VSP) applications.

### EXAMPLES

The present invention will be illustrated by some examples, however it is not to be intended limited to these examples.

The biaxially oriented polyester films prepared by the following Examples and Comparative Examples were evaluated by the methods described below.

FREE SHRINK (%):_it is the percent dimensional change in a 10 cm x 10 cm specimen of film when subjected to a selected heat; it has been measured following ASTM Standard Test Method D 2732, immersing the specimen for 5 seconds in a heated oil bath at 120°C and 140°C.

PEEL TEST (score).

The films reported in the Examples and Comparative Examples were sealed using a SealPac A7 machine onto Faerch Tray coded 2260019008. The sealing temperature was 190°C, the sealing time was 1.0 sec and the sealing pressure was 5.8 bar. The packages had a tab (excess of film) to facilitate the opening of the package.

The peelability property was evaluated through a panel test giving the following scores:

- " strong/no peel seal" when the seal strength was judged too strong by the panelist;

- " peel seal" if the seal strength was considered comfortable enough for an easy opening but still able to keep hermeticity by the panelist;

- " weak seal" if the seal strength was considered low and insufficient to keep hermeticity by the panelist.

Five packages for each example of Table 3 below were opened by each of the three panelists. The average score was reported for each example.

ANTIFOG TEST (score)

A packaging film is defined as " antifog" if its internal surface allows the droplets of water to lay as a smooth and uniform layer allowing visual inspection of the packaged product.

An internal test method was used to evaluate the antifog performance of the coated film.

250 ml of water were placed in a 900 ml glass vessel. The film was then secured through a rubber band tightly over the vessel; the sealant side of the film was placed towards the water without being into contact with the liquid. The vessel was then placed in a refrigerated cooler at 2-4°C. Three vessels were prepared for each example of Table 3.

The specimens so prepared were then observed after 24 hours and scored by three panelists according to the following rating scale, ordered from very poor to excellent antifog properties:
● score 1 for opaque layer of small fog droplets;
● score 2 for opaque or transparent layer of large droplets;
● score 3 for complete layer of large transparent droplets;
● score 4 randomly distributed or large transparent droplets;
● score 5 transparent film without visible water.

The final antifog score is the average of three panelists judgment.

### SURFACE TENSION

Surface tension test pens by Sherman Treaters were used and ASTM D2578 was followed.

The polyester film structure used for the Examples and the Comparative Examples is reported in Table 1:

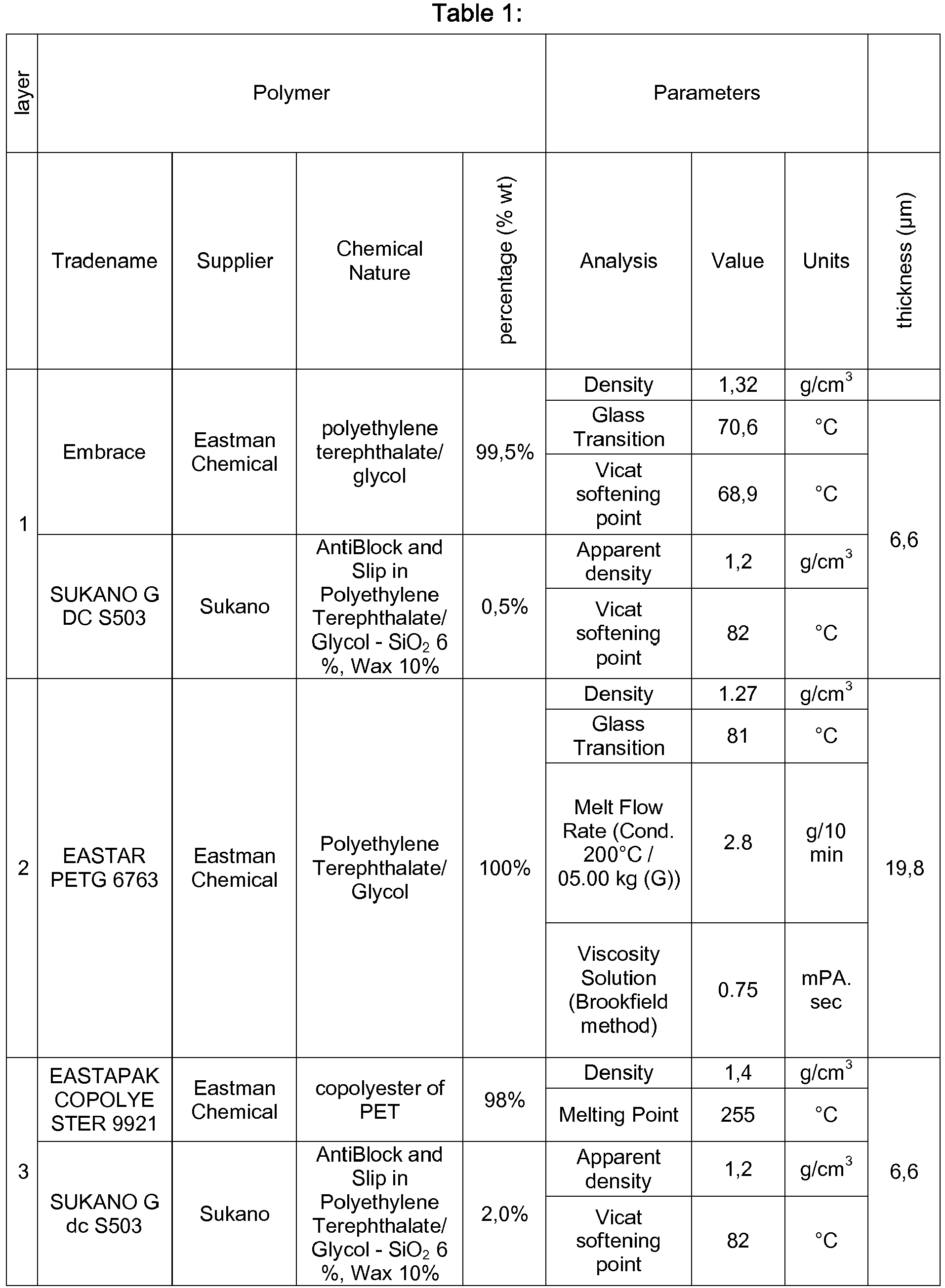

A three-layer film having the composition reported in Table 1 and a total thickness of 33 µ m was coextruded through a 3-layer feedblock. The three layers were then distributed through a flat die, having a multimanifold system. The melt out of the die was quenched onto a chill rolls; electrostatic pinning was applied to increase the contact between melt and chill roll kept at 19°C.

The so formed cast film was then biaxially oriented. The stretching was done simultaneously on a tenterframe, at ratios of 3.8:1 in both MD and TD directions, and at temperatures of 98°C in the preheating zones and 96°C in the stretching zones. Before oven exit, the film was annealed at a temperature of 145°C.

Bioriented film was finally cooled, edge trimmed, and wound into mill logs. The film exhibited a free shrink of:
● 3% in longitudinal direction and 1% in transversal direction at 120°C;
● 10% in longitudinal direction and 7% in transversal direction at 140°C.

The films of Examples 1-6 and Comparative examples 2-4 were corona treated using a two-unit corona treater each having power 20KW. The surface tension of the corona-treated film, evaluated after 24h from the corona treatment, was 50 dyne/cm, while the non-treated film had a surface tension of 44 dyne/cm.

The components used to prepare the coating aqueous compositions for the examples and comparative examples are reported in Table 2:

**Table 2**

| component: | Tradename | Supplier | info | |
|---|---|---|---|---|
| antifog | TWEEN 80 | CRODA | Polysorbate 80 | ethoxylated sorbitan mono-oleate, vegetal origin, density 1.07 g/cc |
| cationic polysaccharide in water | VECTOR SC 20157 | Roquette Freres | starch, 2-hydroxy-3(trimethylammonium)propyl ether, chloride | Viscosity 2500 mPa.sec; density 1.07 g/cc dry substance 20%; degree of substitution 0.16 (1.2%N). |

Water was used as diluent for the preparation of the coating compositions used to prepare the examples and the comparative examples reported in Table 3.

Water was pre-heated and kept at temperature of 40°C in a tank and then the antifog additive and/or the cationic polysaccharides were added, depending on the coating compositions under preparation. For all the examples and the comparative examples, mechanical stirring was used to facilitate the dissolution of the components.

For Examples 1 to 6, the liquid compositions were prepared by adding first the selected amount of the antifog additive into the tank containing the pre-heated water. This mixture was then kept under mechanical stirring up to the dissolution of the antifog into the water. Afterwards, the selected amount of the cationic polysaccharide was added into the tank containing the water and the antifog additive. The composition was kept at 40°C under mechanical stirring up to dissolution of the cationic polysaccharide.

The compositions so prepared were sprayed onto the film sealant surface, in amounts of 0.5- 2.5 ml/sqm by using a WEKO system. The aqueous compositions were sprayed onto the heat-sealable surface of the film in a continuous process during which the film moved at a speed of 30 m/min. The coating compositions to be sprayed were fed to several nozzles through a pump and applied onto the film kept in vertical position. After the spraying, the film was allowed to pass under a spreading roll and then into a drying oven, kept at 90°C for about 4 seconds.

Table 3 reports the details of the tested compositions and the results so obtained in terms of antifog and peelability properties of the coated films.

As can be seen from the data reported in Table 3, the film coated with the composition only comprising the antifog did not show peel seal, while the film coated with the composition only comprising the cationic polysaccharide did not show acceptable antifog scores and exhibited weak seal.

**Table 3**

| Examples: | antifog additive (% wt) | cationic starch (% wt) | spraying level (ml/m²) | film corona treated | Antifog score @24h | peel panel test |
|---|---|---|---|---|---|---|
| comparative 1 | 3,1 | 0,0 | 2 | no | 4,5 | strong/no peel seal |
| comparative 2 | 0,0 | 0,2 | 2,5 | yes | 2 | weak seal |
| comparative 3 | 0,0 | 0,4 | 1,5 | yes | 1,5 | weak seal |
| comparative 4 | 0,0 | 0,4 | 2,5 | yes | 2 | weak seal |
| comparative 5 | 1,1 | 0,2 | 1,5 | no | 3,5 | strong/no peel seal |
| comparative 6 | 1,1 | 0,2 | 2 | no | 3,5 | strong/no peel seal |
| comparative 7 | 1,1 | 0,2 | 2,5 | no | 3,5 | strong/no peel seal |
| comparative 8 | 0,5 | 0,3 | 1,5 | no | 3 | strong/no peel seal |
| comparative 9 | 0,5 | 0,3 | 2 | no | 3 | strong/no peel seal |
| comparative 10 | 0,5 | 0,3 | 2,5 | no | 3 | strong/no peel seal |
| example 1 | 1,1 | 0,2 | 1,5 | yes | 3 | peel seal |
| example 2 | 1,1 | 0,2 | 2 | yes | 4 | peel seal |
| example 3 | 1,1 | 0,2 | 2,5 | yes | 4,5 | peel seal |
| example 4 | 0,5 | 0,3 | 1,5 | yes | 3 | peel seal |
| example 5 | 0,5 | 0,3 | 2 | yes | 3,5 | peel seal |
| example 6 | 0,5 | 0,3 | 2,5 | yes | 4 | peel seal |

The surprising synergistic effect between the antifog additive and the polysaccharide allows obtaining both peelable and antifog film. It was then found that it is possible to balance the antifog and the peelability properties on the basis of the ratio between the antifog additive and the cationic polysaccharide. Depending on the container used and its sealant, on the coated film used and its sealant and on the packaged product, the best coating composition comprising the antifog and the cationic polysaccharide can be tailored.

Another surprising effect of the coated film of the present invention is its ability to be sealed also through contaminants, such as blood or other organic exudates, without significantly impairing the seal strength.

## Claims

1. A coating composition comprising at least an antifog additive, a cationic polysaccharide and a suitable diluent.

2. The coating composition according to claim 1 wherein the weight ratio between said antifog additive and said cationic polysaccharide is comprised between 1: 20 and 20:1, preferably between 1:10 and 10:1, more preferably between 1:7 and 7:1, even more preferably between 1:5 and 5:1.

3. The coating composition according to claims 1 or 2 wherein the weigth ratio between said antifog additive and said cationic polysaccharide is higher than one.

4. The coating composition according to any one of claims 1 to 3 which is a liquid composition and wherein the diluent is water.

5. The coating composition according to any one of claims 1 to 4 comprising said antifog in an amount from 0.1 % to 5.0%, more preferably from 0.1% to 2.0 %, even more preferably from 0.5 % to 1.5% and said cationic polysaccharide in an amount from 0.1 % to 3.5%, more preferably from 0.15% to 3 %, even more preferably from 0.2 % to 1.0%.

6. The coating composition according to any one of claims 1 to 5 comprising from 0.4% to 1.3%, preferably from 0.5 to 1.1 % by weight of the antifog additive, from 0.1 to 0.4 %, preferably from 0.2 to 0.3% by weight of the cationic polysaccharide and water as diluent.

7. The coating composition according to any one of claims 1 to 6 wherein said antifog additive is selected among non-ionic surfactants like polyhydric alcohol fatty acid esters, higher fatty acid amines, higher fatty acid amides, polyoxyethylene ethers of higher fatty alcohols, and ethylene oxide adducts of higher fatty acid amines or amides, preferably among polyhydric alcohol fatty acid esters, polyoxyethylene ethers of higher fatty alcohols and glycerin fatty acid esters, more preferably among polyhydric alcohol fatty acid esters and their ethoxylated derivatives.

8. The coating composition according to any one of claims 1 to 7 wherein said cationic polysaccharide has at least a cationic group selected among ammonium, guanidium, sulfonium, phosphonium groups, bound transition metals, and other positively charged functional groups, preferably quaternary ammonium groups, and wherein the polysaccharide polymer is selected among celluloses, pectins, starches and natural gums, preferably starches.

9. A coated polyester film, preferably a biaxially oriented coated polyester film, said film being obtainable by coating a suitable polyester film with a coating composition according to any one of claims 1 to 8.

10. The biaxially oriented coated polyester film of claim 9 wherein the free shrink in each direction is at most 15% at temperatures below 100°C, below 120°C, and even below 140°C and does not exceed 20% in the temperature range of from 140 to 200°C, and at 180°C, at 160°C, and even at 150°C.

11. A method for the manufacture of a coated polyester film, preferably a biaxially oriented coated polyester film, said method comprising the step of coating a suitable polyester film with a coating composition according to any one of claims 1 to 8.

12. The method of claim 11 comprising the steps of:
a) extruding the suitable polyester film;
b) treating the sealant surface of the film by corona treatment, plasma treatment, flame treatment or primer treatment;
c) coating the film so obtained with a coating composition according to any one of claims 1 to 8;
d) biaxially orienting said extrudate, or preferably:
a) extruding the suitable polyester film;
b) biaxially orienting said extrudate;
c) treating the sealant surface of the polyester film by corona treatment, plasma treatment, flame treatment or primer treatment;
d) coating the film so obtained with a coating according to any one of claims 1 to 8.

13. The method according to any one of claims 10 to 11 wherein said coating step is effected by spraying the coating composition according to any one of claims 1 to 8 onto the sealing surface of the suitable polyester film in doses comprised from 0.1 to 8 ml/m², 0.5 to 7 ml/m², 0.5 to 5 ml/m², 1 to 3 ml/m², preferably from 1.5 ml/m² to 2.5 ml/m².

14. A package comprising the coated polyester film according to any one of claims 9 to 10 and a product, optionally placed into a container.

15. The package according to claim 14 wherein said package:
● comprises a container, a product placed in the container and a lid formed from the coated polyester film of any one of claims 9 or 10 sealed onto the container; or
● comprises a container, a product placed in the container and the coated polyester film of any one of claims 9 or 10 wrapped around and suitably sealed to itself; or
● comprises a bag or a pouch and a product packaged into said bag or pouch, wherein the bag or pouch is formed by self sealing the coated polyester film of any one of claims 9 or 10, or
● comprises a bottom substrate, a product placed onto said bottom substrate and the coated polyester film of any one of claims 9 or 10 draped over said product and sealed onto the surface of the bottom substrate all around the product (VSP), or
● is formed by flexible top and a bottom webs sealed circumferentially and enclosing a product, being both the webs made of the coated polyester film of any one of claims 9 or 10.

16. The package of any one of claims 14 or 15 wherein said product is a food product, preferably fresh meat or fish.
